# EUROPEAN PATENT APPLICATION

(11) **EP 1 416 492 A1**
(43) Date of publication of application: **06.05.2004**
(21) Application number: 02715749.4
(22) Date of filing: 16.01.2002
(51) Int. Cl.: G11B 33/08

(54) **HARD DISK CARTRIDGE**

(30) Priority: 07.08.2001 JP 2001238786; 04.12.2001 JP 2001370516
(71) Applicant: Maxell Seiki, Ltd, Otokuni-gun, Kyoto 618-8558 (JP)
(72) Inventor: OZAKI, Koichi, c/o MAXELL SEIKI, LTD, Otokuni-gun, Kyoto 618-8558 (JP); WAKIZAKA, Yasuaki, c/o MAXELL SEIKI, LTD, Otokuni-un, Kyoto 618-8558 (JP); NARA, Takaaki, c/o MAXELL SEIKI, LTD, Otokuni-gun, Kyoto 618-8558 (JP); NISHIMURA, Hidekazu, c/o MAXELL SEIKI, LTD, Otokuni-gun, Kyoto 618-8558 (JP)
(74) Representative: Selting, Günther, Dipl.-Ing.
(86) International application number: PCT/JP2002/000229
(87) International publication number: WO 2003/015100

(57) **Abstract**

A hard disk cartridge, comprising an outer box and a hard disk body supported in the outer box through a cushion member, wherein a hard frame is installed on at least right and left side faces of the hard disk body and the cushion member is installed on the outer surfaces of the frames so that the upper and lower ends thereof are extruded from the upper and lower surfaces of the hard disk body to the outside, whereby external impacts applied to the hard disk body in lateral and vertical directions can be absorbed by the cushion member and, since the impact force can be relieved sufficiently even if the cushion member is thin, the size of the hard disk cartridge can be reduced accordingly.

## Description

### TECHNICAL FIELD

The present invention relates to a hard disk cartridge having a hard disk body housed in an external box so as to allow detachable mounting on a personal computer and the like.

### BACKGROUND ART

Hard disks are used as high-capacity external memory devices for storing data and programs. In recent years, as disclosed in Japanese Patent Laid-Open Publication No. 5-314745, there is known a hard disk cartridge in which a slim hard disk body having a small vertical thickness is housed in an external box so as to make it portable. The hard disk body of this hard disk cartridge is supported inside an external box via cushion members so as to prevent damages due to an external impact. Inside the hard disk body, there are provided a disk as a storage medium disposed in parallel to the upper and lower surfaces of the hard disk body, and a head that moves along the disk surface to read and write data.

On the front surface of the external box of the hard disk cartridge, a connector for connecting to a personal computer and the like is provided. To the connector is connected the front end of a flexible cable that is disposed inside the external box. A substrate connector provided on the rear end of the flexible cable is inserted into a substrate pin provided on the front surface of the hard disk body.

In the hard disk cartridge in the aforementioned Japanese Patent Laid-Open Publication No. 5-314745, the cushion members absorb an external impact applied to the external box so as to prevent the external impact from being exerted to the hard disk body. However, since the cushion members are disposed in the state of being scattered in pieces, each cushion member should be thicken for sufficiently absorbing the impact force. This imposes a problem that miniaturization of the external box is not achievable in the conventional hard disk cartridge.

The upper and lower surfaces of the hard disk body are prone to curve, so that they are the part that highly requires the protection from an external impact. However, if the cushion members are disposed on the upper and lower surfaces of the hard disk body in the conventional way, the upper and lower surfaces of the hard disk body are pressed by elastic repulsive force when an impact is applied to the external box in the upper and lower directions, causing the upper and lower surfaces of the hard disk body to be curved. As a result, the head fails to appropriately access to the disk, causing an operation failure of the hard disk body.

Further, there is a possibility that the substrate connector is pulled out from the hard disk body by an external impact. To solve this problem, it is considered, for example, to fix the substrate connecter on the hard disk body by means of screws, which, however, leads to increase of the overall manufacturing cost due to an additional process of screw-fixing.

### DISCLOSURE OF THE INVENTION

It is a primary object of the present invention to provide a hard disk cartridge which can sufficiently absorb an external impact force even with a thin cushion member so as to accomplish miniaturization and which can prevent a hard disk body from being curved by elastic repulsive force of the cushion member.

It is another object of the present invention to reliably protect the hard disk body also from an impact in the upper and lower directions.

It is still another object of the present invention to improve productivity of the hard disk cartridge through simplification of an impact absorption means.

It is yet another object of the present invention to reduce a manufacturing cost and to reliably prevent a connector mounted on the front side of the hard disk body from being pulled out forward by external impact force.

In order to accomplish the aforementioned objects, according to the invention; there is provided a hard disk cartridge in which a hard disk body is supported inside an external box via a cushion member, characterized in that a hard frame is attached on at least left and right side surfaces of the hard disk body, and the cushion member is attached on an external surface of the frame so that upper and lower edge portions of the cushion member protrude outwardly from the upper and lower surfaces of the hard disk body.

According to the present invention, the cushion member is attached on the external surface of the frame which is attached at least on left and right side surfaces of the hard disk body, so that gaps between the left and right side surfaces of the hard disk body and the external box are filled with the cushion member. Therefore, an external impact in the left and right directions applied to the hard disk body is absorbed by the cushion member. Further, since the upper and lower edge portions of the cushion member protrude outwardly from the upper and lower surfaces of the hard disk body, an external force in the upper and lower directions applied to the hard disk body is also absorbed by the upper and lower edge portions of the cushion member. Therefore, even if the cushion member is thin, it can sufficiently absorb the impact force, which allows miniaturization of the hard disk cartridge.

Further in the present invention, although elastic repulsive force of the cushion member is applied to the frame when an external impact is exerted on the hard disk cartridge, the frame is less prone to curve because the frame is hard. Therefore, it becomes possible to reliably prevent such operation failure as an inability of the head to appropriately access to the disk due to the hard disk body, especially its upper and lower surfaces, being curved by an external impact through the frame

In the present invention, it is preferable that bending edge portions are provided on front and rear edge portions of the frame in the state of being bent at a right angle so as to stay along front and rear side surfaces of the hard disk body, the bending edge portions being placed on the front and rear side surfaces of the hard disk body, and the cushion member is also attached on external surfaces of the bending edge portions of the frame so that the upper and lower edge portions of the cushion member protrude outwardly from the upper and lower surfaces of the hard disk body. This makes it possible to support the hard disk body inside the external box while the hard disk body is cushioned also in the front and rear directions, as well as further increases the operation of absorbing an external impact in the upper and lower directions.

It is preferable that the cushion member is formed into U-shape in cross section having a recess portion that engages with the frame. Consequently, the total thickness of the frame and the cushion member when the frame is engaged with the recess portion of the cushion member can be reduced to, for example, not more than 5 mm, thereby implementing great contribution to the overall miniaturization. Moreover, in a configuration in which the frame is retrofitted with the cushion member, displacement of the cushion member can be efficiently prevented.

It is preferable that the frame and the cushion member are molded integrally and attached on the hard disk body simultaneously. Herein, the integral molding of the frame and the cushion member is preferably achieved through insert molding. If the frame and the cushion member are integrally molded in advance as stated above, it becomes possible to eliminate the process of retrofitting the frame with the cushion member after the frame is attached on the hard disk body, so that the productivity of the hard disk cartridge is improved.

Further in the present invention, it is preferable that an internal connector is provided on a front surface of the hard disk body, the internal connector being connected to an external connector provided on a front surface of the external box through a cable, and a bending edge portion is provided on the front edge portion of the frame in the state of being bent toward the front side surface of the hard disk body, the bending edge portion preventing the internal connector from being pulled out forward. Consequently, the bending edge portion receives the internal connector and the internal connector is held so as not to be pulled out forward, by which the frame can press the internal connecter to the side of the hard disk body and fix it thereto. As a result, it becomes possible to reliably prevent the internal connector from being pulled out from the hard disk body by an external impact. In addition, since the frame itself also functions as a fixing member for fixing the internal connector to the hard disk body, which is different from the type of the cartridge in which the internal connector is screw-fixed on the hard disk body, manufacturing is implemented at a low cost and assembling workability is improved.

It is to be noted that the bending edge portion of the frame should preferably receives the front side surface of the internal connector. Alternatively, a protrusion should be provided on left and right side surfaces of the internal connector, and the bending edge portion of the frame should receive a front side surface of the protrusion of the internal connector.

### BRIEF DESCRIPTION OF THE DRAWINGS

FIG. 1 is a horizontal cross sectional view showing a hard disk cartridge according to a first embodiment of the present invention;
FIG. 2 is a vertical cross sectional view showing the hard disk cartridge of Fig. 1;
FIG. 3 is a fragmentary enlarged cross sectional view showing the hard disk cartridge of Fig. 1 ;
FIG. 4A is a horizontal cross sectional view showing a modified example of the hard disk cartridge of Fig. 1, in which a frame and a cushion member are integrated;
FIG. 4B is a vertical cross sectional view of Fig. 4A;
FIG. 5 is a plane view showing another modified example of the hard disk cartridge of Fig. 1;
FIG. 6 is a horizontal cross sectional view showing a hard disk cartridge according to a second embodiment of the present invention;
FIG. 7 is a vertical cross sectional view showing the hard disk cartridge of Fig. 6;
FIG. 8 is a horizontal cross sectional view showing a modified example of the hard disk cartridge of Fig. 6; and
FIG. 9 is a plane view showing another modified example of the hard disk cartridge of Fig. 6.

### BEST MODE FOR CARRYING OUT THE INVENTION

### (First Embodiment)

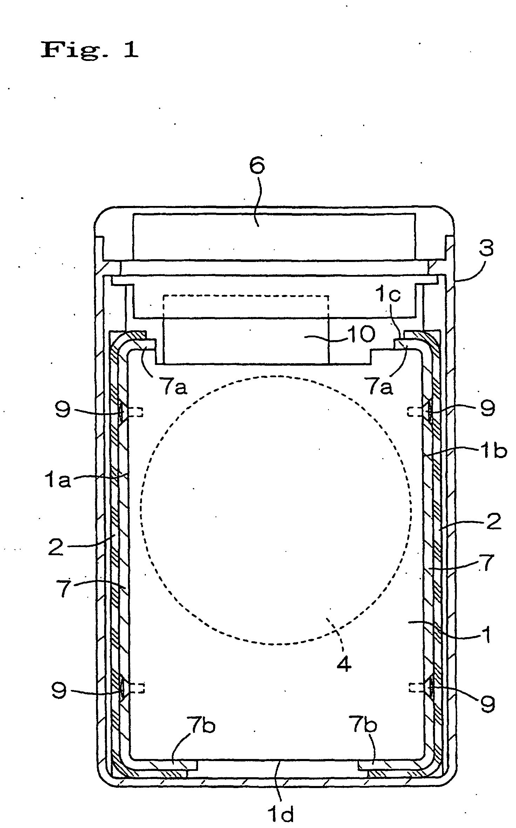

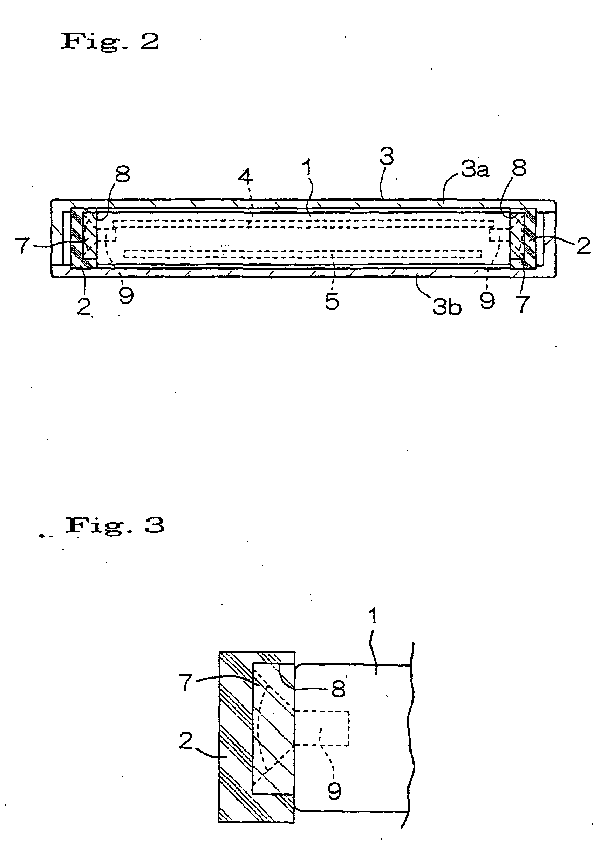

Fig. 1 shows a hard disk cartridge according to a first embodiment of the present invention. A hard disk body 1 is supported inside an external box 3 via cushion members 2. The hard disk body 1 is formed into a slim square shape that is small in vertical thickness and long in the front-to-rear direction. Inside the hard disk body 1, a disk 4, an unshown head and the like are disposed, in addition to which a circuit board 5 with a control circuit and the like being formed thereon is disposed on the lower side of the disk 4 as shown in Fig. 2.

The external box 3 is formed into a square box-shape that is composed of coupled upper and lower cases 3a, 3a made of hard plastic and is long in the front-to-rear direction. Inside an aperture portion on the front surface side of the external box 3, a connector 6 is provided for connecting to a personal computer and the like as shown in Fig. 1. To the rear portion of the connector 6 is connected a terminal 10 provided on the front side of the hard disk body 1.

Left and right side surfaces 1a, 1b on the longitudinal side of the hard disk body 1 are each provided with the cushion member 2 along their front-to-rear direction via a pair of left and light frames 7. Each frame 7 is formed into a thin plate made of a hard material such as hard plastic, stainless steel and aluminum. A vertical width of the frame 7 is smaller than the vertical thickness of the hard disk body 1. The front and rear edge portions of each frame 7 are bend at a right angle so as to stay along the front and rear side surfaces 1c, 1d, and are placed so as to wrap around the left and right edge portions of the front and rear side surfaces 1c, 1d of the hard disk body 1. The cushion member 2 is attached on almost all the external surface of the frame 7.

The cushion member 2, which is made of such material as polyurethane foam and thermoplastic elastomer, is formed to have a U-shaped cross section having a recess portion 8 that engages with the frame 7 so as to thoroughly cover the external surface side of the frame 7 as shown in Fig. 3. When the cushion member 2 is placed and attached on each of the left and right frames 7, the upper and lower edge portions of the cushion member 2 protrude outwardly from the upper and lower surfaces of the hard disk body 1 at the overall surface of the left and right side surfaces 1a, 1b of the hard disk body 1 and at a part of the front and rear side surfaces 1c, 1d thereof.

Next assembling procedures of the hard disk cartridge will be explained. A pair of left and right frames 7 is respectively attached on the left and right side surfaces 1a, 1b of the hard disk body 1 each with two screws 9 at two front and rear positions. Here, bending edge portions 7a, 7b on the front and rear sides of the frame 7 are positioned at the left and right edge portions of the front and rear side surfaces 1c, 1d of the hard disk body 1. Next, while each frame 7 is engaged with the recess portion 8 of the cushion member 2, the cushion member 2 is attached and fixed on the frame 7 with an adhesive material along the entire length of the external surface side of the frame 7 so as to cover it. Then, in the state of a terminal 10 of the hard disk body 1 being connected to the rear portion of the connector 6, the connector 6 and the hard disk body 1 are housed in the external box 3.

In this state, the front and rear portions, the left and right portions and the upper and lower portions of the hard disk body 1 are supported inside the external box 3 via the cushion member 2. The cushion member 2 absorbs an eternal impact that is generated when the external box 3 hits other objects and transmitted to the hard disk body 1.

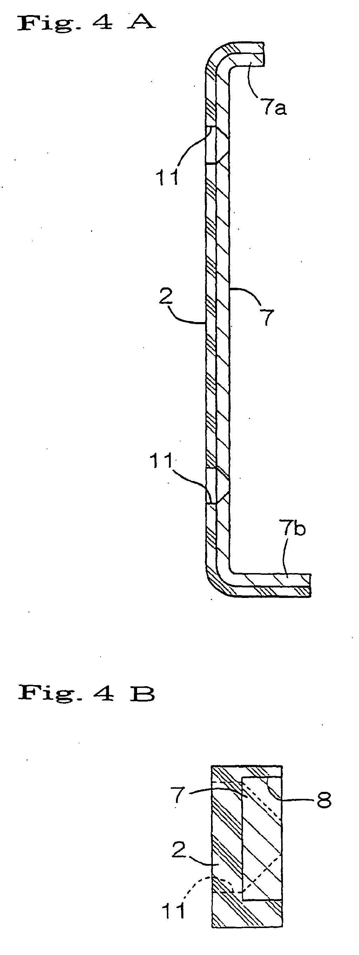

In the case where the frame 7 is formed from hard plastic and the like, the frame 7 and the cushion member 2 should be integrally molded. In the case where the frame 7 is formed from a metal plate such as stainless steel and aluminum, the frame 7 and the cushion member 2 should be integrally molded by, for example, insert molding in which the frame 7 is set in a mold, and a thermoplastic elastomer and the like is melted and injected with an injection molding machine. In these cases of the integral molding, the frame 7 is brought into a state of being engaged with the recess portion 8 of the cushion member 2 as shown in Fig. 4B.

In the case where the frame 7 and the cushion member 2 are integrally molded, through holes 11 for the screws 9 should be formed through the cushion member 2 and the frame 7 as shown in Fig. 4A, and the frame 7 with the cushion member 2 should be screw-fixed on the left and right side surfaces 1a, 1b of the hard disk body 1 according to the procedures described before.

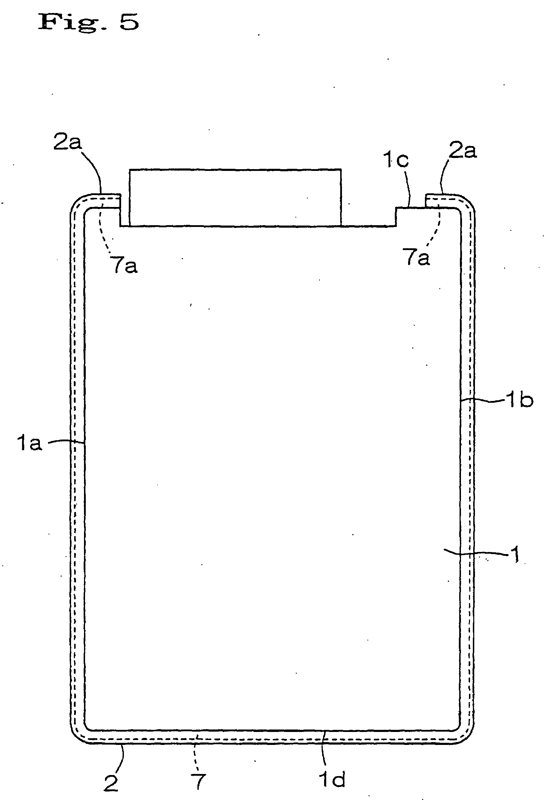

Further, as shown in Fig. 5, the frame 7 may be formed as one frame, and the frame 7 and the cushion member 2 provided on the external surface thereof may be placed on along the entire area of the left and right side surfaces 1a, 1b and a rear side surface 1d of the hard disk body 1, while front bending edge portions 7a, 2a of the frame 7 and the cushion member 2 may be placed on along the left and right edge portions of the front side surface 1c of the hard disk body 1.

In the case where the frame 7 is formed from a metal plate of aluminum, the frame 7 and an external wall of the hard disk body 1 are to be made of the same material, so that a potential difference caused by contact between the frame 7 and the external wall of the hard disk body 1 would not be generated, resulting in prevention of corrosion of the frame 7 in the early stage.

### (Second Embodiment)

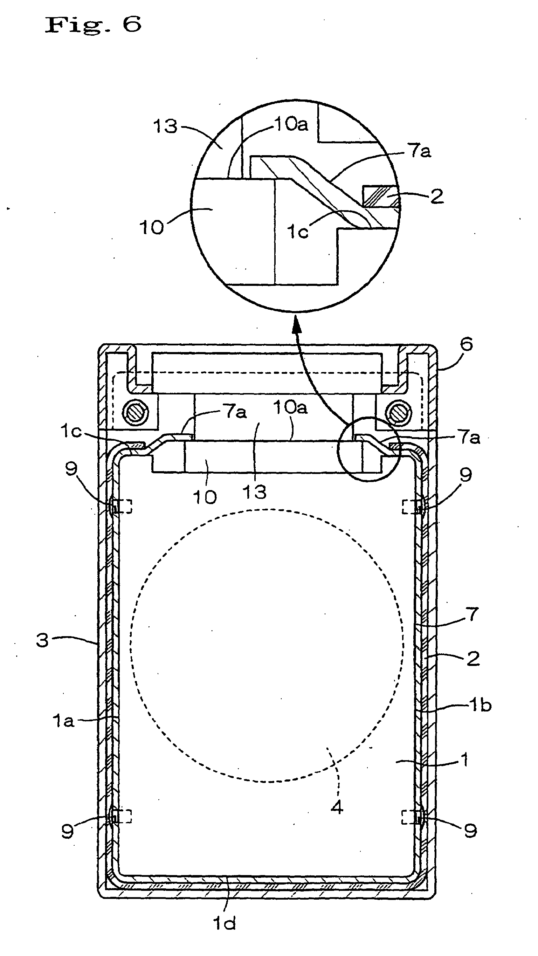

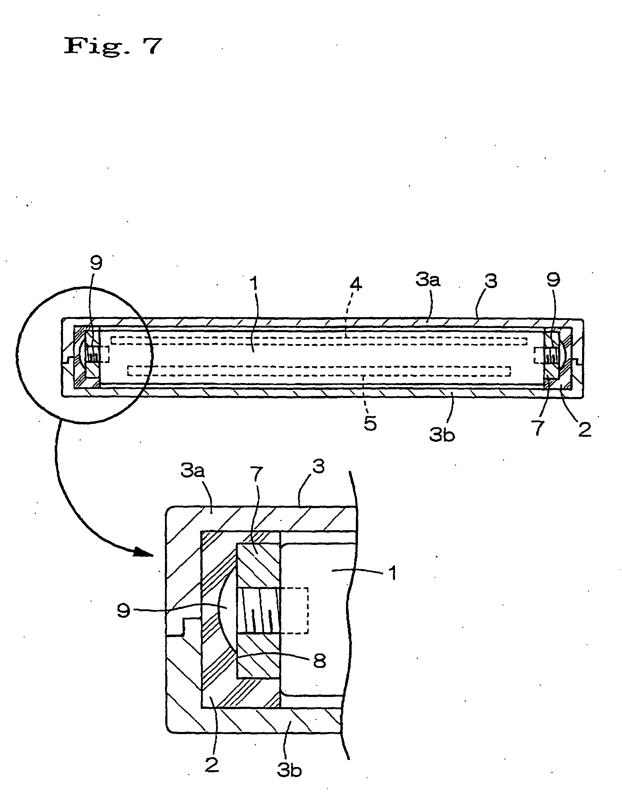

Fig. 6 and Fig. 7 show a hard disk cartridge according to a second embodiment of the present invention. The hard disk cartridge is substantially identical to the hard disk cartridge according to the first embodiment shown in Fig. 1 except the structure of connection between an external connector 6 and an internal connector 10 and the structure of the frame 7, and therefore like component members are designated by like reference numeral for omitting their further description.

Description is now given of the structure of connection between the external connector 6 and the internal connector 10. The front end of a flexible cable 13 is connected to the inner rear portion of the external connector 6, and the rear end of the flexible cable 13 is connected to the internal connector 10. The internal connector 10 is inserted in an unshown terminal provided on the front side of the hard disk body 1 so as to be detachably mounted on the front surface of the hard disk body 1. In the front side surface 1c of the hard disk body 1, the left and right edge portions protrude. The inner rear portion of the internal connector 10 is housed in a recess portion between the left and right edge portions.

In the frame 7, left and right front edge portions 7a, 7a are formed so as to be extended longer than the front-to-rear length of the hard disk body 1 and are each bended inwardly at a right angle so as to face each other and stay along the left and right edge potions of the front side surface 1c of the hard disk body 1. This bending front edge portions 7a, 7a are placed on so as to wrap around the left and right edge portions of the front side surface 1c of the hard disk body 1. More specifically, the frame 7 presents an opened U-shape in plane view on the front side. The open end sides of the left and right front edge portions 7a, 7a facing each other are each formed to be further bended forward at two stages so that the open ends of the left and right front edge portions 7a, 7a come into contact, from the outer front side, with the left and right edge portions of a front side surface 10a of the internal connector 10, respectively.

More particularly, although the frame 7 is made of a hard material, the left and right frame portions thereof are long in the longitudinal direction, so that the front edge sides of the left and right frame portions can be easily deformed so as to open toward the outer left and right sides. Therefore, the open ends of the left and right front edge portions 7a, 7a are opened toward the outer front side. In this state, the internal connector 10 is positioned and set on the front side surface 1c of the hard disk body 1, and then a force to push-open the left and right frame portions of the frame 7 is released. Eventually, the bending front edge portions 7a, 7a are deformed so as to retreat toward the inner rear side, by which the open ends of the bending front edge portions 7a, 7a come into contact with the left and right edge portions of the front side surface 10a of the internal connector 10. By this, the left and right front edge portions 7a, 7a of the frame 7 receive and hold the internal connector 10 so that the internal connector 10 would not be pulled out forward. It is to be noted that a cushioned member may be interposed between the open ends of the bending front edge portions 7a, 7a and the front side surface 10a of the internal connector 10 for securing the contact force where necessary.

As a result, it becomes possible to securely press and fix the internal connector 10 to the front side of the hard disk body 1 with the frame 7. Therefore, the internal connector 10 is prevented from being pulled out forward from the hard disk body 1 by an external impact generated when the external box 3 hits other objects.

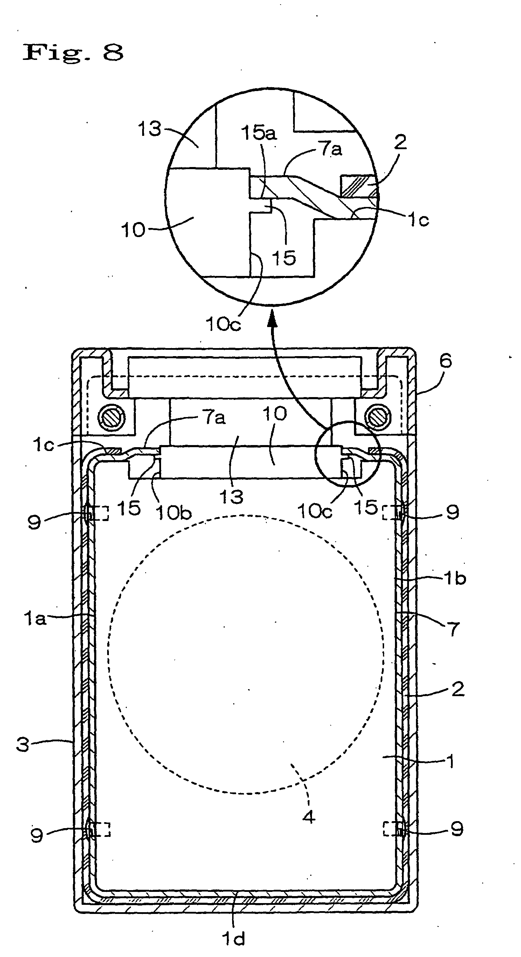

Fig. 8 shows a modified example of the hard disk cartridge of Fig. 6. In this hard disk cartridge, protrusions 15, 15 are each provided along form the top-to bottom direction on left and right side surfaces 10b, 10c of the internal connector 10. Thus, the open ends of the left and right bending front edge portions 7a, 7a of the frame 7 are respectively brought into contact with front side surfaces 15a, 15a of the protrusions 15, 15 of the internal connector 10. Other structures are substantially identical to those of the hard disk cartridge in Fig. 6, and therefore like component members are designated by like reference numeral for omitting their further description.

In this second embodiment, the bending front edge portions 7a, 7a of the frame 7 come into contact with the protrusions 15, 15 of the internal connector 10 to receive them, which prevents the internal connector 10 from being pulled out from the hard disk body 1 by an external impact.

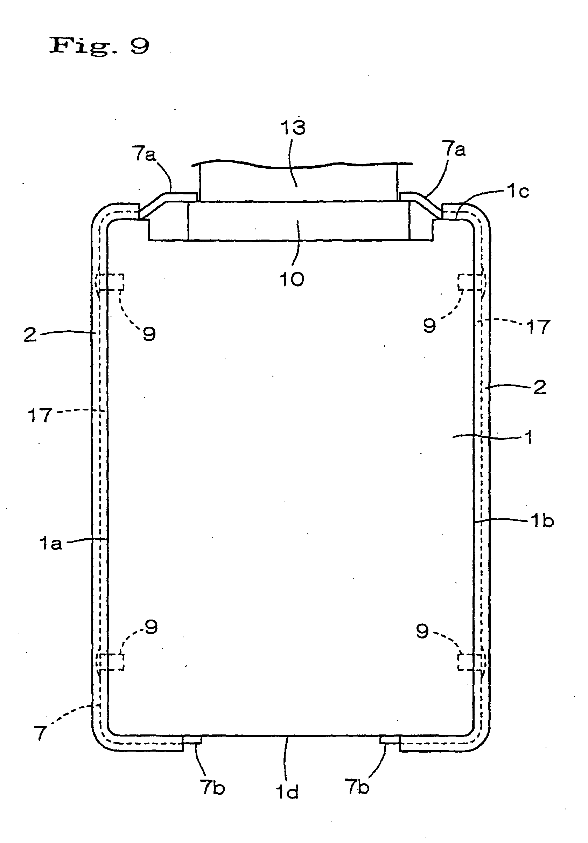

Fig. 9 shows still another modified example of the hard disk cartridge of Fig. 6. The frame 7 of this hard disk cartridge is composed of a pair of frame members 17, 17 divided into left and right sides. The left and right frame members 17, 17 and a cushion member 2 provided on the external surface thereof are placed on along the entire area of the left and right side surfaces 1a, 1b of the hard disk body 1, while front and rear bending edge portions 7a, 7b of the frame 7 composed of the both frame members 17, 17 are each placed on along the left and right edge portions of the front and rear side surfaces 1c, 1d of the hard disk body 1. In this case, the internal connector 10 should be positioned and set on the front side surface 1c of the hard disk body 1, and then the frame members 17, 17 should be fixed with the screws 9 in the state where the open ends of the left and right bending front edge portions 7a, 7a of the frame 7 are in contact with the front side surface 1c of the internal connector 10. Other structures are substantially identical to those of the hard disk cartridge in Fig. 6.

It is to be noted that the hard disk cartridges in Fig. 6, Fig. 8, and Fig. 9 may be the type in which the left and right bending front edge portions 7a, 7a of the frame 7 are not placed on the front side surface 1c of the hard disk body 1, but the open ends of the bending front edge portions 7a, 7a come into contact with the front side surface 10a of the internal connector 10 or the front side surface 15a of the protrusion 15. The cushion member 2 may be mounted on the frame 7 in segments. In the state that the frame 7 is mounted on the hard disk body 1, the internal connector 10 may be fallen from the upper side in between the front surface of the hard disk body 1 and the left and right bending front edge portions 7a, 7a of the frame 7 so as to be mounted thereon.

## Claims

1. A hard disk cartridge in which a hard disk body is supported inside an external box via a cushion member, **characterized in that** a hard frame is attached on at least left and right side surfaces of the hard disk body, and
the cushion member is attached on an external surface of the frame so that upper and lower edge portions of the cushion member protrude outwardly from the upper and lower surfaces of the hard disk body.

2. The hard disk cartridge as defined in Claim 1, wherein
bending edge portions are provided on front and rear edge portions of the frame in the state of being bent at a right angle so as to stay along front and rear side surfaces of the hard disk body, the bending edge portions being placed on the front and rear side surfaces of the hard disk body, and
the cushion member is also attached on external surfaces of the bending edge portions of the frame so that the upper and lower edge portions of the cushion member protrude outwardly from the upper and lower surfaces of the hard disk body.

3. The hard disk cartridge as defined in Claim 1 or 2, wherein the cushion member is formed to have an U-shape cross section having a recess portion that engages with the frame.

4. The hard disk cartridge as defined in any one of Claims 1 to 3, wherein the frame and the cushion member are molded integrally.

5. The hard disk cartridge as defined in Claim 1, wherein an internal connector is provided on a front surface of the hard disk body, the internal connector being connected to an external connector provided on a front surface of the external box through a cable, and
a bending edge portion is provided on the front edge portion of the frame in the state of being bent to the front side surface of the hard disk body, the bending edge portion preventing the internal connector from being pulled out forward.

6. The hard disk cartridge as defined in Claim 5, wherein the bending edge portion of the frame receives a front side surface of the internal connector.

7. The hard disk cartridge as defined in Claim 5, wherein a protrusion is provided on left and right side surfaces of the internal connector, and
the bending edge portion of the frame receives a front side surface of the protrusion of the internal connector.
